# EUROPEAN PATENT APPLICATION

(11) **EP 4 742 130 A1**
(43) Date of publication of application: **13.05.2026**
(21) Application number: 24836308.7
(22) Date of filing: 02.07.2024
(51) Int. Cl.: G06Q 20/06, G06Q 20/02, G06Q 20/36, G06Q 20/38, G06Q 30/06, G06Q 40/04, H04L 9/00, G06Q 20/04, G06Q 20/14

(54) **SYSTEM AND METHOD FOR MANAGING CRYPTOCURRENCIES EVALUATED BY CASH VALUE**

(30) Priority: 03.07.2023 KR 20230086058; 03.07.2023 KR 20230086059; 03.07.2023 KR 20230086060
(71) Applicant: Lordsystem Co., Ltd., Seoul 05542 (KR)
(72) Inventor: JANG, Yang Ho, Yeoncheon-gun, Gyeonggi-do 11020 (KR)
(74) Representative: Jacobi, Markus Alexander
(86) International application number: PCT/KR2024/009327
(87) International publication number: WO 2025/009860

(57) **Abstract**

The present invention relates to a system and a method for managing cryptocurrencies evaluated by cash value, and, more specifically, to a management system and method in which cryptocurrencies such as cryptocurrency, a gift certificate and a discount coupon are recognized as commodities, are judged by cash value, are store in a cryptocurrency wallet, and then are used as a payment means like cash along with a card, and thus the adoption of cryptocurrencies is increased and the cryptocurrencies can be used beyond a card limit. The system for managing cryptocurrencies evaluated by cash value, according to an embodiment of the present invention, comprises: a company server for operating an online/offline shopping mall capable of issuing cryptocurrencies such as a cryptocurrency, a gift certificate and a discount coupon or a card or of paying with the cryptocurrencies; a management server which recognizes the cryptocurrencies as commodities by means of a work agreement with the company server so as to judge same by cash value, and which enters into a contract with the company server to enable payment with the cryptocurrencies, issued by other company servers, at an online/offline shopping mall of one company server; and a user terminal which generates a cryptocurrency wallet for storing the cryptocurrencies, and which makes payment with the cryptocurrencies or the card stored in the cryptocurrency wallet for a product purchased at the online/offline shopping mall.

## Description

### [Technical Field]

The present invention relates to a system and a method for managing cryptocurrencies evaluated by cash value, and more particularly, to a management system and a management method in which cryptocurrencies such as a cryptocurrency, a gift certificate and a discount coupon are recognized as commodities, determined as cash value, stored in a cryptocurrency wallet, and then used as a payment means like cash along with cards, or intermediated for allowing accomplishment of trades, and thus the adoption of cryptocurrencies is increased, the usability of cryptocurrencies is expanded, the utility value is further activated, and the card limit is extended.

### [Background Art]

In general, cryptocurrency, such as Bitcoin or Ethereum, refers to a virtual currency that exists online and does not have a physical form such as banknote or coin.

The cryptocurrency has no physical substance and is generally used only in a virtual environment for a transaction through distributed processing in a peer-to-peer (P2P) scheme collected, stored and transmitted in an electronic wallet based on a blockchain. Since a central processing unit is unnecessary, operating and managing costs are reduced and transactions are performed conveniently and safely.

In other words, a transaction history is stored on computers of all users based on blockchain technology unlike general financial institutions that store the transaction history on a central server. Unlike general currencies, there is no issuer and anyone is allowed to mine cryptocurrency by decrypting.

An account for the cryptocurrency is called an electronic wallet (cryptocurrency wallet), and each electronic wallet is assigned a unique number of approximately 30 characters combined by numbers and lowercases and uppercases of English alphabets to perform transactions based on public key cryptography.

An account for the cryptocurrency may be generated at any place, such as smartphone or computer, in which an electronic wallet is usable, and the cryptocurrency may be transacted by generating a pair of encryption keys online when the account is generated.

Credit cards and other simple payments actually result in a cash transaction as an amount used is withdrawn from a payment account deposited in a bankbook and an account transfer is made. However, commodities are allowed to be bought and sold by using only cryptocurrency, without cash.

In Korea, for example, trading of the cryptocurrency is conducted through cryptocurrency exchanges such as Korbit, Bithumb, and Coinone.

The cryptocurrency exchange refers to a system that allows a user to purchase desired cryptocurrency by depositing a corresponding amount to a virtual account, store the cryptocurrency in an electronic wallet and perform a transaction.

However, due to disadvantage of relatively high price volatility, cryptocurrency may have very low adoption in real life, and have narrow usages in aspects of payment and settlement.

In other words, the conventional electronic wallet is configured as a collecting applications (app) serving as a bankbook for virtual currency, and is limited in remittances or payments like an online bank account only after being cashed through a currency exchange process, thereby causing low adoption and narrow usages.

In addition, because gift certificates or discount coupons are also limited to being used only at specific places or products, such as department store A, shoe store B, coffee shop C, and gas station D, thereby causing low adoption and narrow usages.

Meanwhile, according to a basic mechanism for a payment system of using a card such as a credit card or debit card (check card), when a person requests an approval by using a card as a medium to pay for commodities, and the payment request amount exceeds a payment limit, for example, the payment request amount is 1 million KRW for a debit card recharged with 500,000 KRW, a payment server receiving the request may deny the approval, and accordingly, the payment may fail in a range exceeding a credit limit or balance limit.

### [Disclosure]

### [Technical Problem]

The present invention is provided to solve the above-described conventional problems, and an object of the present invention is to provide a system and a method for managing cryptocurrencies evaluated by cash value to recognize cash value of cryptocurrency, gift certificate, discount coupon, and the like (hereinafter referred to as "cryptocurrencies") based on a business agreement and store the cryptocurrencies in an electronic wallet, so as to be integrated and used as a means of payment and settlement like cash together with cards upon purchasing goods or using services from companies recognizing the cash value, so that the adoption and wide utilization of the cryptocurrencies such as cryptocurrency, gift certificate, and discount coupon may be increased.

In addition, another object of the present invention is to provide a system and a method for managing cryptocurrencies evaluated by cash value to store the cryptocurrencies in an electronic wallet so as to be used as a means of payment and settlement like cash together with cards by attaching relevant information data upon purchasing goods or using services, so that the cryptocurrencies may be used beyond the credit limit or balance limit of the cards.

In addition, another object of the present invention is to provide a system and a method for trading cryptocurrencies evaluated by cash value to assess cash value of the cryptocurrencies and store the assessed cash value in an electronic wallet, so as to enable trading of the cryptocurrencies between management servers, or match buyer's buying conditions with seller's selling conditions upon trading of the cryptocurrencies, thereby enabling trading through brokerage, so that usability of the cryptocurrencies may be further expanded and utility value may be further activated.

### [Technical Solution]

In order to achieve the above mentioned objects, a system for managing cash value-evaluated cryptocurrencies according to the embodiments of the present invention includes: a company server for issuing a card or cryptocurrencies such as cryptocurrency, gift certificate discount coupon, or operating an online/offline shopping mall allowing payment using the cryptocurrencies; a management server that recognizes the cryptocurrencies as goods to determine the recognized cryptocurrencies as cash value based on a business agreement with the company server, and concludes a contract with the company server to allow payment using cryptocurrencies issued by another company server at the online/offline shopping mall of the company server; and a user terminal for generating an electronic wallet to store the cryptocurrencies and performing payment for a commodity purchased from the online/offline shopping mall by using the cryptocurrencies or a card stored in the electronic wallet.

A method for managing cash value-evaluated cryptocurrencies according to the embodiments of the present invention includes the steps of: (A) issuing, by a company server, cards or cryptocurrencies including cryptocurrency, gift certificate and discount coupon; (B) performing a business agreement regarding recognition and operation as goods for the cryptocurrencies between the company server and a management server; (C) recognizing, by the management server, the cryptocurrencies as goods, determining cash value on the goods, and concluding a contract with the company server to allow payment of the cryptocurrencies in an online/offline shopping mall operated by another company server; (D) generating an electronic wallet on a user terminal to store the cryptocurrencies; (E) purchasing, by the user terminal, a commodity through the online/offline shopping mall and then performing payment by using the cryptocurrencies stored in the electronic wallet; (F) processing, by a blockchain, a transaction subject to the payment of the cryptocurrencies in connection with the electronic wallet, storing processing details in distributed blocks, and storing movements of the cryptocurrencies on the management server; and (G) depositing, by the company server, a commission for the payment of the cryptocurrencies into an account of the management server.

### [Advantageous Effects]

According to the above-mentioned technical solution, cash value of cryptocurrency, gift certificate, discount coupon, and the like (hereinafter referred to as "cryptocurrencies") may be recognized based on a business agreement and stored in an electronic wallet, so as to be used as a means of payment and settlement like cash together with cards upon purchasing goods or using services from companies recognizing the cash value, so that the adoption and wide utilization of the cryptocurrency, gift certificate, and discount coupon can be increased

In addition, the cryptocurrencies may be stored in an electronic wallet so as to be used as a means of payment and settlement like cash together with cards by attaching relevant information data upon purchasing goods or using services, so that the cryptocurrencies can be used beyond the credit limit or balance limit of the cards.

In addition, the real-name authentication of gift certificates and discount coupons can be implemented as an additional benefit.

In addition, the present invention may assess cash value of the cryptocurrencies and store the assessed cash value in an electronic wallet, so as to enable trading of the cryptocurrencies between management servers, or match buyer's buying conditions with seller's selling conditions upon trading of the cryptocurrencies, thereby enabling trading through brokerage, so that. usability of the cryptocurrencies can be further expanded and utility value can be further activated.

### [Description of Drawings]

FIG. 1 is a block diagram of a system for managing cash value-evaluated cryptocurrencies according to one embodiment of the present invention.
FIGS. 2 and 3 are views for illustrating examples of use of cryptocurrencies stored in the electronic wallet of FIG. 1.
FIG. 4 is a block diagram of a system for managing cash value-evaluated cryptocurrencies according to another embodiment of the present invention.
FIG. 5 is a view for illustrating an example of exchanging cryptocurrencies stored in the electronic wallet of FIG. 4.
FIGS. 6 and 7 are views for illustrating a vectorization concept and matching of selling conditions or buying conditions illustrated in FIG. 4.
FIG. 8 is a flowchart showing a method for managing cash value-evaluated cryptocurrencies according to one embodiment of the present invention.
FIG. 9 is a flowchart showing a method for managing cash value-evaluated electronic currencies according to another embodiment of the present invention.
FIG. 10 is a flowchart showing a method for managing cash value-evaluated electronic currencies according to a still another embodiment of the present invention.
FIG. 11 is a view showing a configuration of a TripPASS prepaid card as an example of a prepaid card of the electronic wallet according to the embodiment of the present invention.
FIG. 12 is a view showing a real-time payment configuration of the TripPASS prepaid card shown in FIG. 11.
FIG. 13 is a view showing an integrated payment process of the TripPASS prepaid card shown in FIG. 11.
FIG. 14 is a view showing an integrated cancellation process of the TripPASS prepaid card shown in FIG. 11.
FIG. 15 is a view showing a partial cancellation process of the TripPASS prepaid card shown in FIG. 11.
FIG. 16 is a view showing a partial cancellation configuration of the TripPASS prepaid card shown in FIG. 11.

### [Best Mode]

### [Mode for Invention]

Hereinafter, the configuration and operation of the embodiment of the present invention will be described with reference to the accompanying drawings.

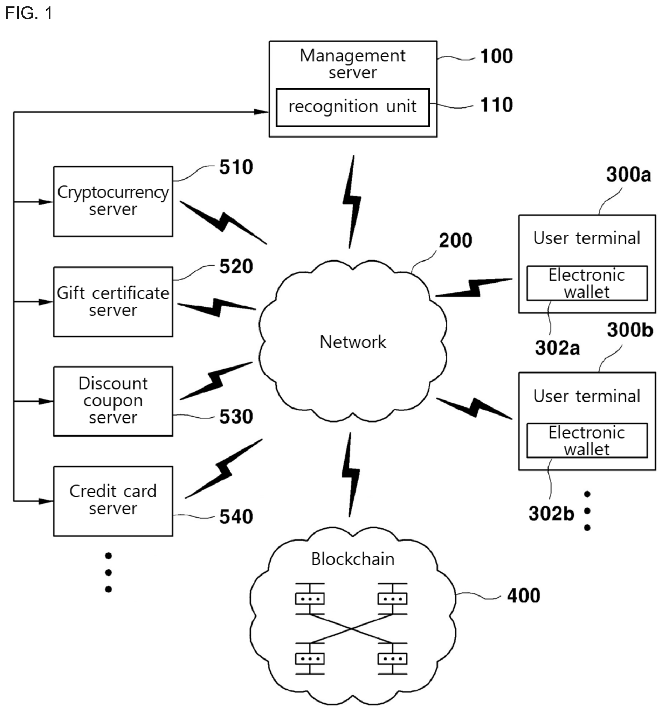

Referring to FIG. 1, a system for managing cash value-evaluated cryptocurrencies according to the embodiments of the present invention includes a management server 100, a user terminal 300a, 300b..., a blockchain 400, and a company server 510, 520, 530, 540..., and the management server 100 has a recognition unit 110.

The communication scheme therebetween may include any communication scheme that allows objects to network with each other via a wired and/or wireless network 200, and is not limited to wired communication, wireless communication, 3G, 4G, or other schemes.

For example, the above-described wired and/or wireless network 200 may refer to a communication network using one or more communication schemes selected from the group including Local Area Network (LAN), Metropolitan Area Network (MAN), Global System for Mobile Network (GSM), Enhanced Data GSM Environment (EDGE), High Speed Downlink Packet Access (HSDPA), Wideband Code Division Multiple Access (W-CDMA), Code Division Multiple Access (CDMA), Time Division Multiple Access (TDMA), Bluetooth, Zigbee, Wi-Fi, Voice over Internet Protocol (VoIP), LTE Advanced, IEEE802.16m, WirelessMAN-Advanced, HSPA+, 3GPP Long Term Evolution (LTE), Mobile WiMAX (IEEE 802.16e), UMB (formerly EV-DO Rev. C), Flash-OFDM, iBurst and MBWA (IEEE 802.20) systems, HIPERMAN, Beam-Division Multiple Access (BDMA), World Interoperability for Microwave Access (Wi-MAX), or ultrasonic wave-based communication, however, the present invention is not limited thereto.

The system, terminal and server according to the embodiments of the present invention may be entirely hardware, or may have aspects that are partially hardware and partially software.

For example, the operation system, the management server 100, the company server 510, 520, 530, 540... and the user terminal 300a, 300b... and each unit included therein may be a general term for hardware and related software configured to process data having a specific format and content or/and transmit and receive the data through electronic communication.

In this specification, the term such as terminal, server or system is intended to refer to a combination of hardware and software driven by the hardware.

For example, the hardware may be a data processing device including a CPU or another processor.

In addition, the software driven by hardware may refer to a running process, an object, an executable file, a thread of execution, a program, and the like.

The company server 510, 520, 530, 540... refers to a server, such as a cryptocurrency server 510, a gift certificate server 520, a discount coupon server 530 and a credit card server 540, for issuing cryptocurrencies and/or cards (credit cards, rechargeable cards, debit cards, prepaid cards, and the like) and/or operating online/offline shopping malls, and functions at least partially as an application server that communicates with an application (or app) executed on the user terminal 300a, 300b... to allow the performance of functions of the application.

In addition/alternatively, the company server may also function as a web server that provides a predetermined webpage accessible through a web browser or the like executed on the user terminal 300a, 300b....

More specifically, the company server 510, 520, 530, 540... concludes a contract with the management server 100 regarding, for example, issuing of cryptocurrencies and/or cards, being recognized as a commodity having a cash value for the cryptocurrencies issued by the company server through a business agreement with the management server 100, and using of the cryptocurrencies as a means of payment along with cards on a webpage or (offline) store operated by another company recognized by the management server 100.

The cryptocurrencies are recognized as goods by the management server 100 and evaluated to have a cash value, and may be assigned with a unique identification number in the form of barcode, QR code or the like, and registered and managed online.

In addition, the cryptocurrencies may have a fixed expiration period subject to types thereof, and accordingly, cash value of the corresponding cryptocurrency notified on a sub-page of the management server 100 may decrease when the expiration period has arrived.

The company server 510, 520, 530, 540... may operate an online/offline shopping mall or the like for allowing the use of cryptocurrencies issued by the company server, and allow users to use cryptocurrencies issued by the other companies as a means of payment like cash along with cards in the online/offline shopping mall or the like.

Upon payments using the cryptocurrencies, the cash value may be equivalent or different between the cryptocurrencies issued by the company server and the cryptocurrencies issued by the other companies.

For example, in the case of gift certificates for the cryptocurrencies and when the gift certificates of Company A and Company B have the same cash value at 50,000 KRW, the cash value of the gift certificate of Company A may set as 50,000 KRW upon payment at a shopping mall of Company A, however, the cash value of the gift certificate of Company B may be set as 50,000 KRW or more or less.

The company server 510, 520, 530, 540... may notify cryptocurrencies allowed to be paid at the online/offline shopping mall operated by the company server, so as to facilitate using of the cryptocurrencies payable when the user terminal 300a, 300b... accesses the company server and pays for purchasing commodities.

In addition, the company server 510, 520, 530, 540... may calculate commission for the payment performed via the cryptocurrencies or cards, and pay the commission by depositing the commission into a designated account of the management server 100 daily, weekly or monthly.

The user terminal 300a, 300b... refers to a device used by a user, and the user terminal 300a, 300b... may be used to purchase commodities from the online/offline shopping mall operated by the company server, and perform payment through cash value-recognized cryptocurrencies or cards stored in electronic wallet 302a, 302b....

The cryptocurrencies or cards may be registered and administered in the management server 100 through the unique identification number, and moved from an electronic wallet 302a, 302b... of the user terminal 300a, 300b... having purchased the commodities to an electronic wallet of the company server 510, 520, 530, 540... so as to be stored.

The user terminal 300a, 300b... may have an application program installed and executed for linking with the management server 100, and an electronic wallet 302a, 302b... installed for using various cryptocurrencies or cards.

In one embodiment, the user terminal 300a, 300b... may be implemented in the form of a smartphone, and perform payment for purchased commodities through the application on the user terminal 300a, 300b... equipped with the electronic wallet 302a, 302b....

However, the user terminal 300a, 300b... is not limited to the smartphone, and may be any available computing device such as another mobile communication terminal, computer, laptop computer, PDA, and tablet computer.

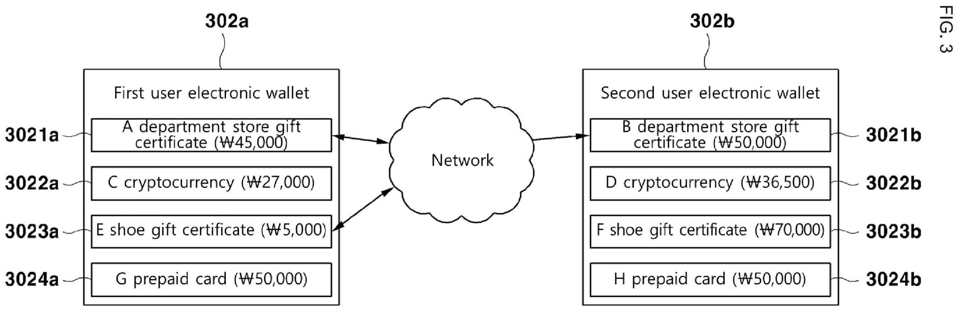

The cryptocurrencies, such as cryptocurrency, gift certificate, and discount coupon, stored in the electronic wallet 302a, 302b... of the user terminal 300a, 300b... may be traded or exchanged for cryptocurrencies of equivalent cash value between the user terminals 300a, 300b... (see FIG. 3).

In addition, the user terminal 300a, 300b... may output a notification sound as an audio or display a notification message on a screen with respect to upcoming expired cryptocurrencies among the cryptocurrencies stored in the electronic wallet 302a, 302b... of the user terminal, so as to enable the user to quickly dispose of the upcoming expired cryptocurrencies.

The blockchain 400 refers to a blockchain-based platform that constitutes one or more cryptocurrencies handled by the management server 100, and may contain multiple nodes.

The blockchain 400 is linked to electronic wallets included in the company server 510, 520, 530, 540..., the management server 100 and the user terminal 300a, 300b... to process transactions subject to payments, (buying and selling) trades, and exchanges for corresponding cryptocurrencies or cards, and store the processed details in distributed blocks.

The recognition unit 110 of the management server 100 recognizes the cryptocurrency issued by the company server as goods based on the business agreement and determines cash value thereof, and concludes a contract with the company server 510, 520, 530, 540... regarding use of the cryptocurrencies, in the same manner as cards or other payment means, on a webpage or (offline) store operated by other company recognized by the management server 100.

In addition, the management server 100 may function as an application server that communicates with an application (or app) executed on the user terminal 300a, 300b... to allow the performance of functions of the application, or function as a web server to provide a predetermined webpage accessible through a web browser or the like executed on the user terminal 300a, 300b....

In addition, the management server 100 may notify the cash value-recognized cryptocurrencies recognized as goods on the webpage provided by the management server, and provide information and links about online/offline shopping malls operated by companies allowing the use of the cryptocurrencies such that users can easily access the online/offline shopping malls through user terminals.

In addition, the management server 100 may transmit information about cash value-recognized cryptocurrencies as goods newly recognized by the management server to the company servers 510, 520, 530, 540..., so that the cryptocurrencies are allowed to be used as a means of payment in the online/offline shopping malls operated by the companies.

In addition, the management server 100 may register and administer the cash value-recognized cryptocurrencies through unique identification numbers, and notify of upcoming expired cryptocurrencies among the cryptocurrencies registered and administered by the management server to the user terminal 300a, 300b... having the electronic wallets 302a, 302b... storing the upcoming expired cryptocurrencies.

In addition, the management server 100 may operate a sub-webpage for the upcoming expired cryptocurrencies, and the sub-webpage may notify the upcoming expired cryptocurrencies, expiration dates, cash values, and the like to inform the usage in which the cryptocurrencies may have decreased cash value when the expiration date is closer (this is set by concluding a contract with the company server).

The user may access the sub-webpage through the user terminal 300a, 300b, etc., purchase the upcoming expired cryptocurrencies at a low price if necessary, and use the purchased cryptocurrencies upon making a purchase of commodities (via cash or cryptocurrencies stored in the electronic wallet).

For example, when an amount determined as cash value by the management server for gift certificate A of a first user terminal 300a is 50,000 KRW, the cash value is notified to be lowered as, for example, 50,000 KRW before one week of the expiration date, 49,000 KRW before 6 days, 47,000 KRW before 5 days, 44,000 KRW before 4 days, and 40,000 KRW before 3 days.

When a second user terminal 300b purchases gift certificate A for 40,000 KRW before 3 days, stores the purchased gift certificate A in an electronic wallet 302b, and then pays with the gift certificate A for purchasing a commodity worth 50,000 KRW at a shopping mall operated by the company server 520, the second user is allowed to purchase the commodity worth 50,000 KRW at a low price of 40,000 KRW, and the first user is allowed to sell the gift certificate A reaching the expiration date for 40,000 KRW without discarding the gift certificate A, thereby benefiting both of the first user and the second user.

In addition, for example, when cash value of gift certificate M is determined as 10,000 KRW, and when a paid amount is 5,500 KRW, 4,500 KRW remains.

At this time, from the management standpoint of the management server 100, there is a potential need to comprehensively manage the case such as an imbalance occurring in the goods when the whole of gift certificate M is transferred.

For example, when 4,500 KRW remains as in the above-described case, a buffer server configured to subsequently manage a remaining discrepancy amount by treating the discrepancy amount as having been paid or by reconciling the discrepancy amount through arithmetic adjustment, may be further provided.

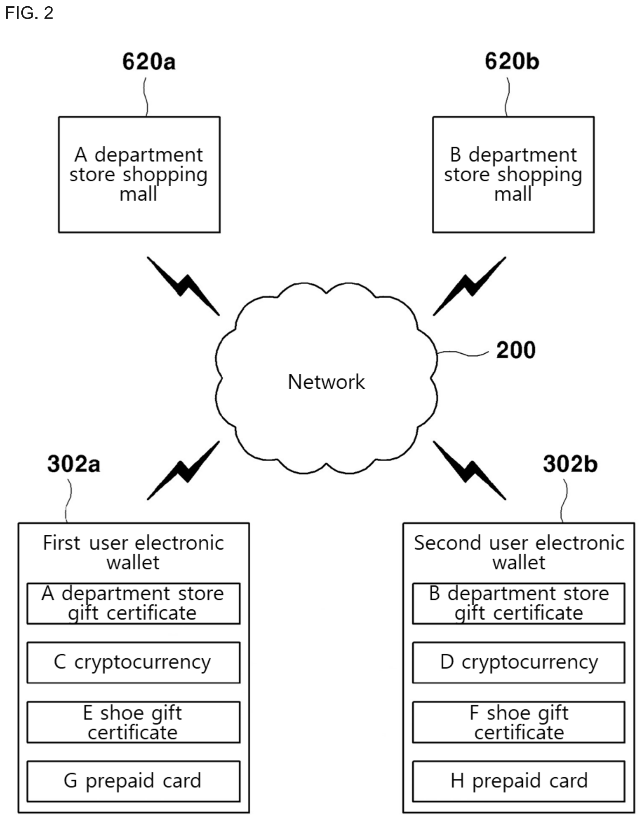

FIGS. 2 and 3 are views for illustrating examples of use of cryptocurrencies stored in the electronic wallet of FIG. 1.

As shown in FIG. 2, a first user electronic wallet 302a stores an A department store gift certificate 3021a, a C cryptocurrency 3022a, an E shoe discount coupon 3023a, and a G prepaid card 3024a, and a second user electronic wallet 302b stores a B department store gift certificate 3021b, a D cryptocurrency 3022b, an F shoe gift certificate 3023b, and an H prepaid card 3024b.

Each cryptocurrency is assigned as an amount determined by cash value value-recognized by the business agreement in the management server 100.

For example, as shown in FIG. 3, cash value is as follows: 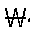 45,000 for the A department store gift certificate 3021a, W27,000 for the C cryptocurrency 3022a, 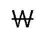 5,000 for the E shoe discount coupon 3023a, 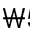 50,000 for the B department store gift certificate 3021b, 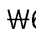 6,500 for the D cryptocurrency 3022b, and 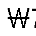 70,000 for the F shoe gift certificate 3023b.

In addition, 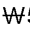 50,000 is recharged in each of the G prepaid card 3024a and the H prepaid card 3024b.

In this case, when the first user pays for purchasing a commodity worth 50,000 KRW at a B department store shopping mall 620b, the payment may be performed using the A department store gift certificate 3021a and the E shoe discount coupon 3023a, and when the second user pays for purchasing a commodity worth 50,000 KRW at an A department store shopping mall 620a, the payment may be performed using the B department store gift certificate 3021b.

The blockchain 400 may be linked with the electronic wallets to process transactions subject to the payments for the corresponding cryptocurrencies and store processing details thereof across a plurality of blocks in a distributed manner, and movements of the corresponding cryptocurrencies may also be stored in the management server 100.

As shown in FIG. 3, when the cash value of the A department store gift certificate 3021a + the E shoe discount certificate 313c of the first user electronic wallet 302a is 50,000 KRW, and the cash value of the B department store gift certificate 3021b of the second user electronic wallet 302b is equivalent to 50,000 KRW, the first user and the second user may exchange cryptocurrencies with each other through agreement if necessary.

When the cash value is different, cryptocurrencies may be traded based on a mutual agreement by paying more cash for the insufficient cash value.

The blockchain 400 may be linked with the electronic wallets to process transactions subject to the exchanges for the corresponding cryptocurrencies and store processing details thereof across a plurality of blocks in a distributed manner, and movements of the corresponding cryptocurrencies may also be stored in the management server 100.

In this way, FIG 2 shows that payments may be performed at shopping malls of different companies using different types of cryptocurrencies, and FIG. 3 shows that cryptocurrencies of different types and companies may be exchanged as equivalent cash value.

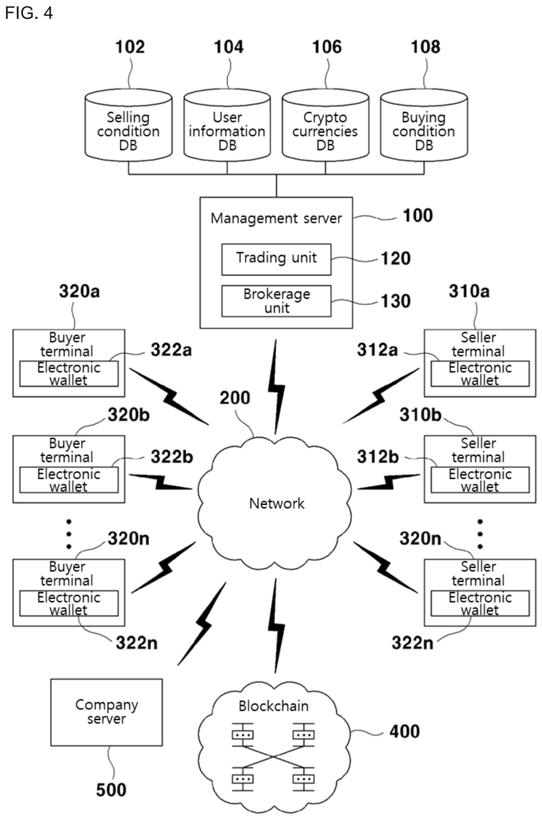

FIG. 4 is a block diagram of an operation system for cash value evaluation cryptocurrencies according to another embodiment of the present invention.

Referring to FIG. 4, a system for managing cash value-evaluated electronic currencies according to another embodiment of the present invention includes a management server 100, a seller terminal 310a, 310b..., a buyer terminal 320a, 320b..., a blockchain 400, and a company server 500, and the management server 100 has a trading unit 120 and a brokerage unit 130.

Hereinafter, the user terminal 300a, 300b... shown in FIG. 1 will be described as divided into seller terminals 310a, 310b... and user terminals 320a, 320b..., and a detailed description of the functions of the configuration as shown in FIG. 1 will be omitted.

The company server 500 refers to a server for issuing cryptocurrencies and/or operating an online/offline shopping mall, and functions as an application server that communicates with an application (or app) executed on the seller terminal 310a, 310b... or the buyer terminal 320a, 320b... to allow the performance of functions of the application.

In addition/alternatively, it may also function as a web server that provides a webpage accessible through a web browser running on the seller terminal 310a, 310b... or the buyer terminal 320a, 320b....

The user terminals may mutually trade cryptocurrencies, such as cryptocurrency, gift certificate, and discount coupon, stored in the electronic wallets of the user terminals, and for further understanding of the present invention, the user terminals will be described as divided into seller terminals 310a, 310b... wanting to sell the cryptocurrencies and buyer terminals 320a, 320b... wanting to buy the cryptocurrencies.

The seller terminal 310a, 310b... may register selling conditions, such as types of cryptocurrencies to be sold among cryptocurrencies stored in the electronic wallet 312a, 312b... of the seller terminal, selling price, expiration date, and discount rate (%), to the management server 100 through the network 200, and the management server 100 may upload the selling conditions of the cryptocurrencies registered by the seller terminal 310a, 310b... to a trading webpage operated by the management server.

In addition, the seller terminal 310a, 310b... may modify the selling conditions when the trade fails for a long period of time under the selling conditions registered by the seller terminal. When any of the registered cryptocurrencies has an expiration date, the cryptocurrencies having the upcoming (approaching) expiration date may be allowed to be uploaded to the sub-webpage after the selling price is reduced as the expiration date approaches based on the agreement with the management server 100.

For example, when the management server 10 value-recognized the gift certificate A as goods and a price determined as cash value is 50,000 KRW and when an initial selling price subject to the selling conditions is 50,000 KRW, the selling price may be uploaded to the sub webpage, for example, so as to be the same as 50,000 KRW one week before the expiration date and reduced (modified) to 49,000 KRW 6 days before, 47,000 KRW 5 days before, 44,000 KRW 4 days before, and 40,000 KRW 3 days before.

Alternatively, the seller terminal 310a, 310b... may access the management server 100 through the network 200 and input selling conditions, such as types of cryptocurrencies to be sold among cryptocurrencies stored in the electronic wallet 312a, 312b... of the seller terminal, selling price, expiration date, and discount rate (%), may determine whether to agree to buying conditions of a counterparty (buyer) and notify the management server 100 of the result when the management server 10 notifies one more buying conditions of the counterparty similar to the selling conditions of the seller terminal, and may modify selling conditions of the seller terminal when wanted buying conditions of the counterparty are absent.

The buyer terminal 320a, 320b... may access the trading webpage of the management server 100 through the network 200, check the selling conditions of the cryptocurrencies uploaded to the trading webpage, and select cryptocurrencies to purchase, so that the trading of cryptocurrencies proceeds between the seller terminal 310a, 310b... and the buyer terminal 320a, 320b....

Alternatively, likewise, the buyer terminal 320a, 320b... may access the management server 100 through the network 200 and inputs buying conditions, such as types of cryptocurrencies to be purchased by the buyer terminal, buying price, expiration date, and discount rate (%), may determine whether to agree to selling conditions of a counterparty (seller) and notify the management server 100 of the result when the management server 100 notifies one more buying conditions of the counterparty similar to the buying conditions of the buyer terminal, and may modify the buying conditions of the buyer terminal when wanted selling conditions of the counterparty are absent.

Accordingly, when the selling conditions and the buying conditions are consistent between the seller and the buyer, or when the selling conditions or the buying conditions of the counterparty are agreed, the trading of cryptocurrencies proceeds between the seller terminal 310a, 310b... and the buyer terminal 320a, 320b....

Based on the agreement with the seller, the buyer may directly deposit the selling price in cash into an account of the seller, pay with a credit card, or pay the selling price with the cryptocurrencies stored in the electronic wallet of the buyer.

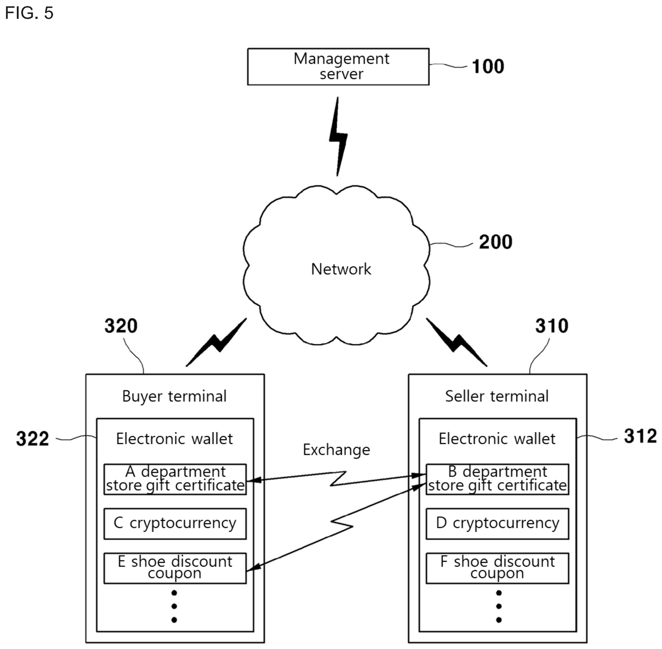

In addition, as shown in FIG. 5, cryptocurrencies having equivalent cash value may be exchanged between the user terminals through the management server 100.

As shown in FIG. 5, the A department store gift certificate, the C cryptocurrency, and the E shoe discount coupon may be stored in the electronic wallet 322 of the buyer terminal 320, and the B department store gift certificate, the D cryptocurrency, and the F shoe gift certificate may be stored in the electronic wallet 312 of the seller terminal 310.

Each of the cryptocurrencies is assumed to have cash value of 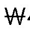 45,000 for the A department store gift certificate, 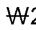 27,000 for the C cryptocurrency, W5,000 for the E shoe discount coupon, 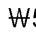 50,000 for the B department store gift certificate, W6,600 for the D cryptocurrency, and W70,000 for the F shoe gift certificate.

When the cash value of the A department store gift certificate + the E shoe discount certificate of the buyer electronic wallet 322 is 50,000 KRW, and the cash value of the B department store gift certificate of the buyer electronic wallet 312 is equivalent to 50,000 KRW, the seller and the buyer may exchange cryptocurrencies with each other through the agreement.

Although FIG. 5 illustrates the exchange of cryptocurrencies between the seller and the buyer, cryptocurrencies may be exchanged between sellers or between buyers through the management server 100.

The management server 100 may function as an application server that communicates with an application (or app) executed on the seller terminal 310a, 310b... or the buyer terminal 320a, 320b... to allow the performance of functions of the application, or function as a web server to provide a predetermined webpage accessible through a web browser or the like executed on the seller terminal 310a, 310b... or the buyer terminal 320a, 320b....

In addition, the trading unit 120 of the management server 100 may operate a trading webpage to upload the selling conditions of cryptocurrencies registered from the seller terminal so as to trade the cryptocurrencies, and may additionally operate a sub-webpage and upload modified selling conditions for cryptocurrencies having upcoming (approaching) expiration dates in the case of the registered cryptocurrencies have expiration dates, so that the cryptocurrencies having the upcoming (approaching) expiration dates can be traded.

As the expiration date approaches, the selling price is reduced and uploaded to the sub-webpage based on the agreement with the seller terminal 310a, 310b....

For example, when an initial selling price subject to the selling conditions for the gift certificate A registered by the first seller is 50,000 KRW, the selling price may be reduced (modified), for example, to 49,000 KRW 6 days before the expiration date, 47,000 KRW 5 days before, 44,000 KRW 4 days before, and 40,000 KRW 3 days before and the modified selling conditions including the modified selling price may be uploaded to the sub-webpage.

When the first buyer purchases the gift certificate A for 40,000 KRW 3 days before the expiration date, stores the purchased gift certificate A in the electronic wallet, and then pays with the gift certificate A for purchasing a commodity worth 50,000 KRW at a shopping mall operated by a company server 500, the first buyer is allowed to purchase the commodity worth 50,000 KRW at a low price of 40,000 KRW, and the first seller is allowed to sell the gift certificate A reaching the expiration date for 40,000 KRW without discarding the gift certificate A, thereby benefiting both of the first seller and the first buyer.

In addition, the management server 100 may operate a trading webpage and a sub-webpage for cryptocurrencies to connect the seller terminal 310a, 310b... and the buyer terminal 320a, 320b... to each other, thereby enabling trading of cryptocurrencies between users.

The brokerage unit 130 of the management server 100 may receive selling conditions and buying conditions from the seller terminal 310a, 310b... and the buyer terminal 320a, 320b... to match and connect the selling conditions and the buying conditions with each other, thereby enabling conclusion of the trading of cryptocurrencies between the users, and receiving the corresponding brokerage commission.

The selling conditions and the buying conditions may be three-dimensionally vectorized and matched based on the vectorizations.

In other words, selling prices, expiration dates, and discount rates among the selling conditions entered by the seller may be vectorized into a three dimension and stored in a selling condition DB 102, buying prices, expiration dates, and discount rates among the buying conditions entered by the buyer may be vectorized into a three dimension and stored in a buying condition DB 108, and an exactly matching three-dimensional vector may be found, if any, by matching the three-dimensional vectors of the seller and the buyer, so that the found matching three-dimensional vector is notified to the seller terminal 310a, 310b... and the buyer terminal 320a, 320b....

In addition, when the exactly matching three-dimensional vector is absent, one or more similar three-dimensional vectors may be found, and one or more counterpart buying conditions and selling conditions corresponding to the found three-dimensional vectors may be notified to the seller terminal 310a, 310b... and the buyer terminal 320a, 320b..., so that the trading between users may concluded.

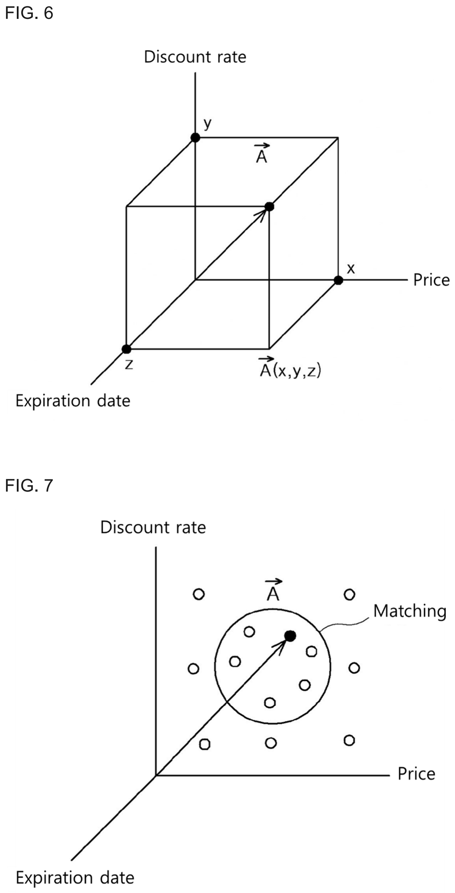

For example, as shown in FIGS. 6 and 7, when the x-axis is a selling price (buying price), the y-axis is a discount rate, and the z-axis is an expiration date, three-dimensional vectors are generated with the x-axis, the y-axis and the z-axis as three axes for selling conditions or buying conditions, and the three-dimensional vectors are matched.

In addition, the management server 100 operates and manages a selling condition DB 102 for storing selling conditions registered by sellers, a user information DB 104 for storing information on sellers and buyers, a cryptocurrencies DB 106 for storing information on cryptocurrencies (types of the cryptocurrencies, valuation price, selling price, a presence of expiration date and the expiration date, movements of the cryptocurrencies, and the like), and a buying condition DB 108 for storing buying conditions registered by buyers.

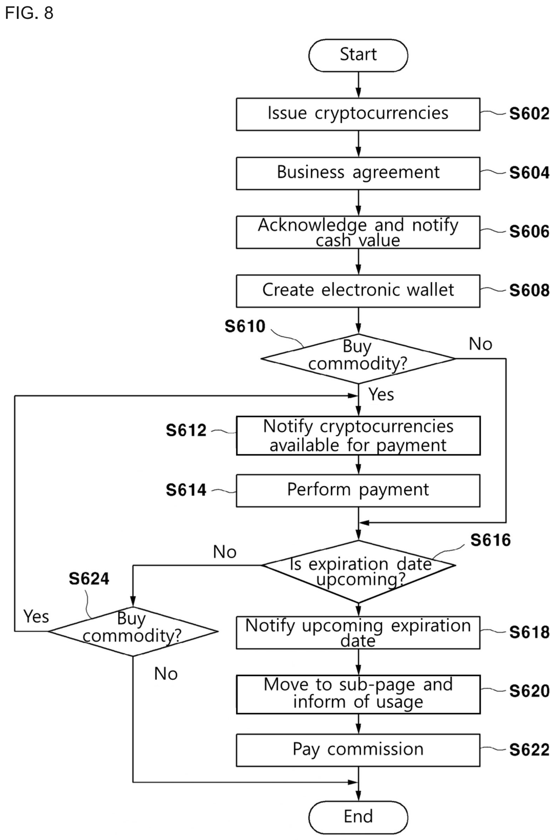

FIG. 8 is a flowchart showing a method for managing cash value-evaluated cryptocurrencies according to one embodiment of the present invention.

As shown in FIG. 8, in the method for managing cash value-evaluated cryptocurrencies according to one embodiment of the present invention, first, the company server 510, 520, 530, 540... issues cards or cryptocurrencies such as cryptocurrency, gift certificate and discount coupon (S602).

Next, the company servers 510, 520, 530, 540... and the management server 100 enter into a business agreement regarding recognition of cryptocurrencies issued by the company servers as goods and management and operation thereof (S604).

The recognition unit 110 of the management server 100 recognizes the cryptocurrencies issued by the company servers 510, 520, 530, 540... as goods and determines cash values thereof, concludes a contract regarding operation of the cryptocurrencies as a means of payment on a webpage or an offline store operated by another company recognized by the management server 100, and provides information on the cryptocurrencies on a webpage provided by the management server (S606).

The user terminal 300a, 300b... purchases cryptocurrencies or cards recognized by the management server 100 and issued by the company server 510, 520. 530, 540..., generates an electronic wallet 302a, 302b... in the user terminal, and stores the purchased cryptocurrencies or cards (S608).

The user terminal 300a, 300b... accesses an online/offline shopping mall operated by the company server 510, 520, 530, 540,... and using the cryptocurrencies recognized by the management server 100 as a means of payment, logs in, and then purchases a commodity (S610).

When the user terminal 300a, 300b... performs payment for the purchased commodity, the company server 510, 520, 530, 540,... notifies cryptocurrencies available for the payment on a webpage(S612), and the user terminal 300a, 300b... performs the payment for the purchased commodity by using cards or cryptocurrencies available for the payment among the cryptocurrencies stored in the electronic wallet 302a, 302b... of the user terminal (S614).

The blockchain 400 is linked with the electronic wallets to process transactions subject to the payments for the corresponding cryptocurrencies or cards and store processing details thereof across a plurality of blocks in a distributed manner, and movements of the corresponding cryptocurrencies or cards are stored in the management server 100.

Meanwhile, the user terminal 300a, 300b... checks whether upcoming expired cryptocurrencies (for example, one week before expiration date) are present among the cryptocurrencies stored in the electronic wallet 302a, 302b... of the user terminal (S616), and outputs a notification sound as an audio or displays a notification message on a screen with respect to upcoming expired cryptocurrencies, if any, so as to enable the user to quickly dispose of the upcoming expired cryptocurrencies (S618).

In addition, the management server 100 operates a sub-webpage for upcoming expired cryptocurrencies among cryptocurrencies registered and managed by the management server, and notifies the upcoming expired cryptocurrencies, expiration dates, cash values, and the like on the sub-webpage to inform a usage (S620).

At this moment, cash value of the cryptocurrencies may be notified to be decreased as the expiration date is closer.

For example, when initial cash value of the cryptocurrencies is 50,000 KRW, the cash value may be notified to be lowered as, for example, 50,000 KRW before one week of the expiration date, 49,000 KRW before 6 days, 47,000 KRW before 5 days, 44,000 KRW before 4 days, and 40,000 KRW before 3 days.

The user terminal 300a, 300b... may access the sub-webpage to purchase cryptocurrencies having the upcoming expiration date at a low price (via cash or cryptocurrencies stored in the electronic wallet) if necessary, and use the purchased cryptocurrencies to purchase commodities.

In addition, when payment is concluded for the purchased commodity by using cash value- recognized cryptocurrencies or cards, the company server 510, 520, 530, 540... calculates commissions and deposits the commissions into a designated account of the management server 100 on a contracted date for the commissions (S622).

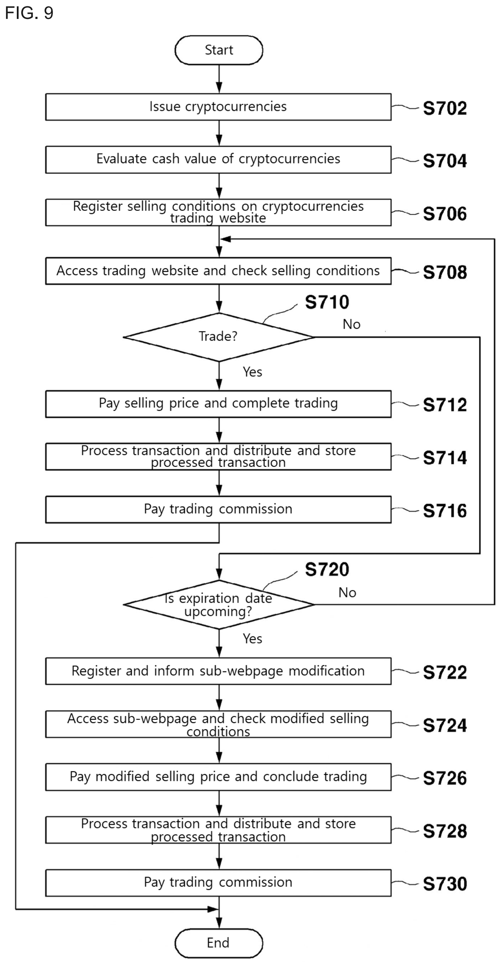

FIG. 9 is a flowchart showing a method for managing cash value-evaluated electronic currencies according to another embodiment of the present invention.

As shown in FIG. 9, in the method for managing cash value-evaluated electronic currencies according to another embodiment of the present invention, first, the company server 500 issues cryptocurrencies such as cryptocurrency, gift certificate, and discount coupon (S702).

Next, the management server 100 recognizes the cryptocurrencies issued by the company server 500 as goods and evaluates the cryptocurrencies as cash value (S704).

The seller uses the seller terminal (for example, 310a) to register, to the management server 100, selling conditions including types of cryptocurrencies (such as cryptocurrency, gift certificate, and discount coupon), selling price, expiration date, and discount rate for the cryptocurrencies (cryptocurrencies stored in the electronic wallet 312 of the seller terminal) to be sold by the seller, and the trading unit 120 of the management server 100 stores the registered selling conditions in the selling condition DB 102 and uploads the stored selling conditions to the trading webpage operated by the management server (S706).

The buyer accesses the trading webpage of the management server 100 through the buyer terminal (for example, 320a) and checks the selling conditions of cryptocurrencies uploaded by the trading unit 120 to the trading webpage (S708).

Next, when the buyer wants to purchase cryptocurrencies corresponding to the selling conditions checked on the buyer terminal 320a (S710), the buyer selects the cryptocurrencies to purchase and pays the seller the selling price subject to the selling conditions, and the cryptocurrencies stored in the electronic wallet 312a of the seller terminal 310a are newly stored in the electronic wallet 322a of the buyer terminal 320a, and accordingly, the transaction (trading of the cryptocurrencies) is concluded (S712).

The blockchain 400 is linked with the electronic wallets 312a, 322a to process transactions subject to the trading for the corresponding cryptocurrencies and store processing details thereof across a plurality of blocks in a distributed manner, and a movement relationship of the cryptocurrencies is stored in the cryptocurrencies DB 106 of the management server 100 (S714).

At least one of the seller terminal 310a and the buyer terminal 320a having concluded the transaction pays a trading commission subject to completion in transaction of the cryptocurrencies to the management server 100 (S716).

Meanwhile, when cryptocurrencies having the upcoming (approaching) expiration date are present among the cryptocurrencies registered in step S706 (S722), the management server 100 modifies the selling conditions (for example, lowering the selling price), uploads the modified selling conditions to the sub-webpage, and guides the uploaded and modified selling conditions on the trading webpage, so as to induce the buyer terminal 320a to access the sub-webpage (S724).

The buyer accesses the sub-webpage of the management server 100 through the buyer terminal (for example, 320a) and checks the modified selling conditions of the cryptocurrencies uploaded to the sub-webpage (S724).

Next, the buyer selects cryptocurrencies to be purchased among the cryptocurrencies having the modified selling conditions checked on the buyer terminal 320a and pays the seller a modified selling price for the modified selling conditions, and the cryptocurrencies stored in the electronic wallet 312a of the seller terminal 310a are newly stored in the electronic wallet 322a of the buyer terminal 320a, and accordingly, the transaction (trading of the cryptocurrencies) is concluded (S726).

The blockchain 400 is linked with the electronic wallets 312a,322a to process transactions subject to the trading for the corresponding cryptocurrencies and store processing details thereof across a plurality of blocks in a distributed manner, and a movement relationship of the cryptocurrencies is stored in the cryptocurrencies DB 106 of the management server 100 (S728).

At least one of the seller terminal 310a and the buyer terminal 320a having concluded the transaction pays a trading commission subject to completion in transaction of the cryptocurrencies to the management server 100 (S730).

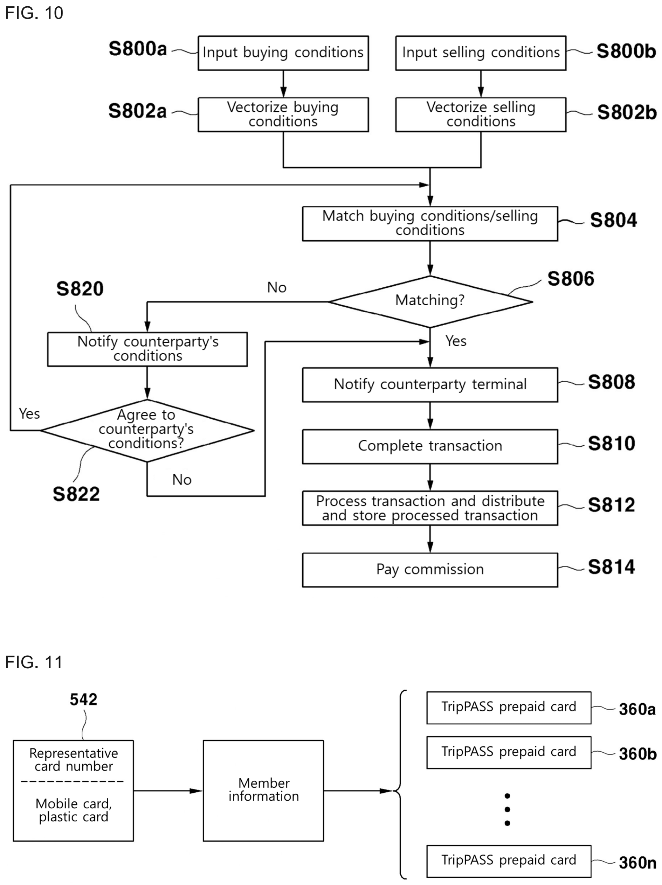

FIG. 10 is a flowchart showing an operating method for cash value evaluation electronic currencies according to a still another embodiment of the present invention.

As shown in FIG. 10, in the method for managing cash value-evaluated electronic currencies according to the embodiments of the present invention, first, the seller uses the seller terminal (for example, 310a) to input, to the management server 100, selling conditions including types of cryptocurrencies (such as cryptocurrency, gift certificate, and discount coupon), selling price, expiration date, and discount rate for the cryptocurrencies (cryptocurrencies stored in the electronic wallet 312 of the seller terminal) to be sold by the seller (S800b).

In addition, the buyer uses the buyer terminal (for example, 320a) to input, to the management server 100, buying conditions including types of cryptocurrencies (such as cryptocurrency, gift certificate, and discount coupon), buying price, expiration date, and discount rate for the cryptocurrencies to be purchased by the buyer (S800a).

The brokerage unit 130 of the management server 100 stores the selling conditions and the buying conditions in the selling condition DB 102 and the buying condition DB 108, respectively, and simultaneously vectorizes the selling conditions and the buying conditions stored in the DB 102, 108 into three dimensions with three axes of the selling price (buying price), expiration date, and discount rate (see FIG. 6) (S802a, S802b), and the three-dimensional vectors are stored separately in the selling condition DB 102 and the buying condition DB 108.

In addition, the brokerage unit 130 of the management server 100 compares and matches a new three-dimensional vector with the counterpart three-dimensional vectors stored in the existing DB 102, 108 (S804).

For example, the seller's three-dimensional vector is compared and matched with multiple buyers' three-dimensional vectors, and the buyer's three-dimensional vector is compared and matched with multiple sellers' three-dimensional vectors.

When the three-dimensional vectors of the seller and the buyer are matched with each other (S806), the brokerage unit 130 of the management server 100 notifies the matching to the seller terminal 310a and the buyer terminal 320a (S808).

Meanwhile, in step S806, when the three-dimensional vectors are not matched with each other, it is check whether a counterpart three-dimensional vector similar to the corresponding three-dimensional vector is present (see FIG. 7), so that buying conditions or selling conditions corresponding to one or more similar counterpart three-dimensional vectors are notified to the seller terminal 310a or the buyer terminal 320a (S820).

In other words, the management server 100 notifies the seller terminal 310a of the buying conditions of the one or more similar three-dimensional vectors, and notifies the buyer terminal 320a of the selling conditions of the one or more similar three-dimensional vectors.

In FIG. 7, for example, when vector A is a buyer's three-dimensional vector and the remaining points are multiple sellers' three-dimensional vectors, one or more similar seller's three-dimensional vectors adjacent to vector A are identified via matching, and selling conditions corresponding to the one or more similar seller's three-dimensional vectors are notified to the buyer terminal 320a.

Next, the buyer terminal 320a or the seller terminal 310a notified of the selling conditions or the buying conditions determines whether to agree to one or more selling conditions or buying conditions among one or more the selling conditions or buying conditions of similar three-dimensional vectors (S822), and notifies the agreement to the counterparty's selling conditions or buying conditions, if any, to the management server 100.

The management server 100 notifies the agreement to the buyer terminal (for example, 320b) or the seller terminal (for example, 310b) presenting the agreed selling conditions or buying conditions, together with counterparty information including the account number (S808).

The buyer terminal 320b notified of the agreed selling conditions deposits the selling amount into the account number of the seller terminal 310a, and the cryptocurrencies stored in the electronic wallet 312a of the seller terminal 310a are newly stored in the electronic wallet 322b of the buyer terminal 320b, and accordingly, the transaction (trading of the cryptocurrencies) is concluded (S810).

The blockchain 400 is linked with the electronic wallets 312a,322b to process transactions subject to the trading for the corresponding cryptocurrencies and store processing details thereof across a plurality of blocks in a distributed manner, and a movement relationship of the cryptocurrencies is stored in the cryptocurrencies DB 106 of the management server 100 (S812).

At least one of the seller terminal 310a and the buyer terminal 320b having concluded the transaction pays a brokerage commission subject to completion in transaction of the cryptocurrencies to the management server 100 (S814).

Meanwhile, in step S822, when the buyer or seller does not agree to the counterparty's selling conditions or buying conditions, the buying conditions or selling conditions may be modified and input through the buyer terminal 320a or seller terminal 310a (S800a, S800b), or step S804 and subsequent steps may be performed without inputting the buying conditions or selling conditions.

FIG. 11 is a view showing a configuration of a TripPASS prepaid card as an example of a prepaid card of the electronic wallet according to the embodiment of the present invention.

TripPASS refers to an app produced based on a mobile tourism and a mobile finance platform for foreigners traveling in Korea. Since TripPASS is based on a mobile passport, there is no need to carry passport, and moreover, prepaid financial services may be provided just like Koreans and tax refunds may be immediately provided only by simply installing the app on a mobile phone.

Simple payments may be allowed anytime, anywhere by simply recharging a prepaid card of TripPASS, and payments may be performed immediately at a tax-free price while shopping without separate tax refunds.

In other words, since there is no need to go through the separate tax refund process, a queue for getting a tax refund is unnecessary, and an inconvenience in presenting a physical passport is unnecessary.

As shown in FIG. 11, the management server 100 uses member information registered on a card corresponding to the representative card number 542 among mobile cards or plastic cards issued by the credit card server 540 among the company servers to issue multiple TripPASS prepaid cards 360a, 360b, ..., and 360n set in a recharging limit (for example, 500,000 KRW) and stores the issued TripPASS prepaid cards in an electronic wallet as for cryptocurrencies.

The TripPASS prepaid card 360a, 360b, ..., and 360n may be registered and managed through barcode or QR code having a unique identification number.

In addition, when payments are performed using the multiple TripPASS prepaid cards, the management server 100 approves integrated payments using the representative card number, or approves integrated cancellation or partial cancellation on the approved integrated payments.

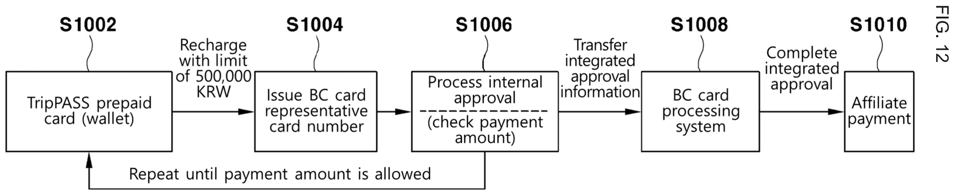

FIG. 12 is a view showing a real-time payment configuration of the TripPASS prepaid card shown in FIG. 11.

As shown in FIG. 12, when payment for goods or services at an affiliate is requested using the TripPASS prepaid cards recharged to a predetermined amount (S1002), the representative card number is used (S1004) to confirm a payment amount, process an internal approval, and then transfer integrated approval information to a credit card processing system (S1006), and the credit card processing system transfers the integrated approval completion to the affiliate (S1008), thereby performing the payment at the affiliate (S1010).

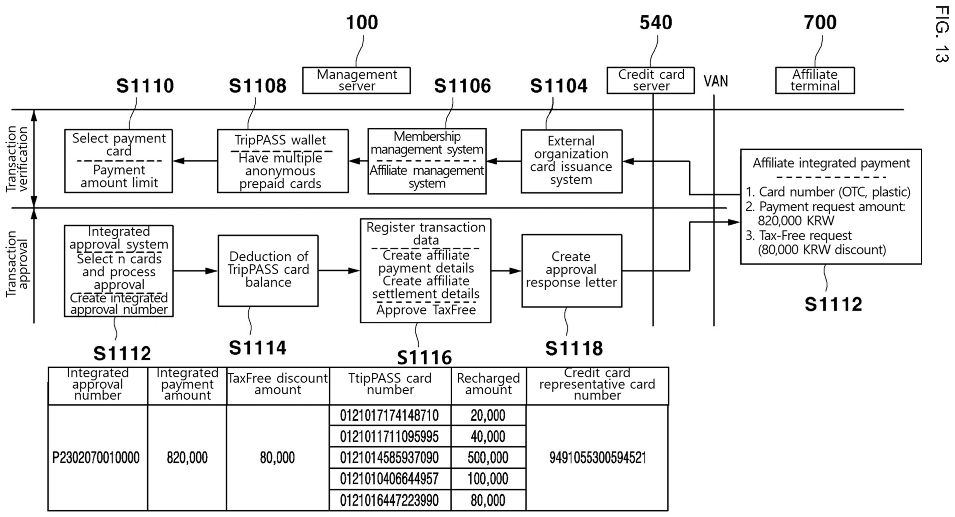

FIG. 13 is a view showing an integrated payment process of the TripPASS prepaid card shown in FIG. 11.

As shown in FIG. 13, when the TripPASS prepaid cards are used for purchasing goods or using services at an affiliate and an integrated payment is requested at an affiliate terminal 700, a tax refund is requested together while transmitting information such as representative card number and payment request amount to the management server 100 via the credit card server 540 (S1102).

The management server 100 performs transaction verification through an internal external organization card issuance unit (S1104), a member management unit and an affiliate management unit (S1106), and a TripPASS prepaid card unit (wallet) (S1108), and selects a payment card to check a payment amount limit, thereby completing transaction verification (S1110).

Next, the management server 100 completes the transaction verification, and then the transaction is approved.

In other words, the integrated approval unit processes approval for the multiple TripPASS prepaid cards and generates an integrated approval number (S1112), and a paid amount is deducted from multiple recharged TripPASS prepaid cards (S1114).

In addition, affiliate payment details and settlement details are generated and tax refunds are approved, so that transaction data is registered (S1116), and a corresponding approval response letter is generated (S1118) and notified to the affiliated terminal 700.

Accordingly, the affiliate terminal 700 performs an integrated payment for the multiple TripPASS prepaid cards.

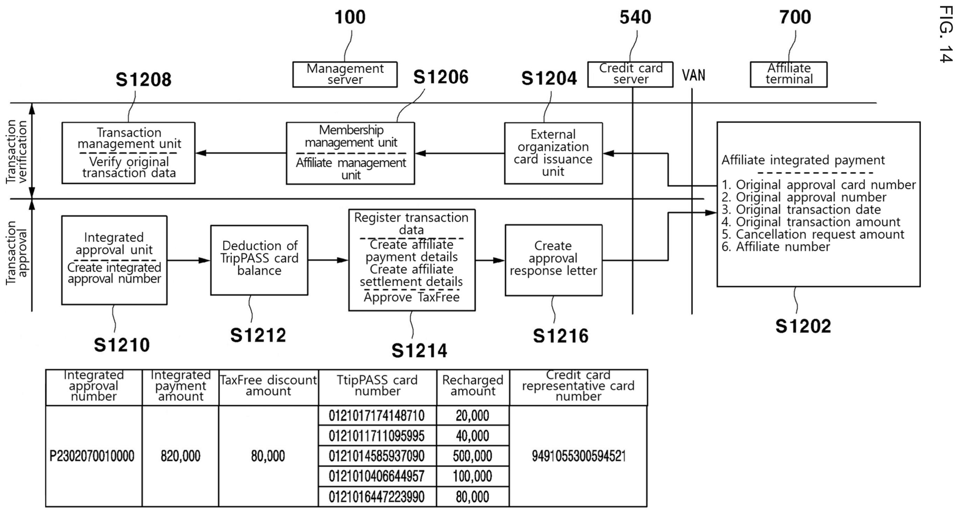

FIG. 14 is a view showing an integrated cancellation process of the TripPASS prepaid card shown in FIG. 11.

When an integrated cancellation is requested at the affiliate terminal 700 for some reason after completing the integrated payment through the steps as in FIG. 13, the integrated cancellation is requested by transmitting information such as original approval card number, original approval number, original transaction date, original transaction amount, cancellation request amount, and affiliate number to the management server 100 through the credit card server 540 as shown in FIG. 14 (S1202).

The management server 100 goes through the internal external organization card issuance unit (S1204), the member management unit and the affiliate management unit (S1206), and the transaction management unit, thereby verifying the original transaction data (S1208).

Next, the integrated approval unit of the management server 100 generates an integrated cancellation number (S1210), and cancels a usage history while restoring the deducted amount of the multiple TripPASS prepaid cards (S1212).

In addition, affiliate cancellation details and settlement details are generated and the tax refunds are canceled, so that transaction data is registered (S1214), and a corresponding approval response letter is generated (S1216) and notified to the affiliated terminal 700.

Accordingly, the affiliate terminal 700 performs an integrated cancellation for the multiple TripPASS prepaid cards.

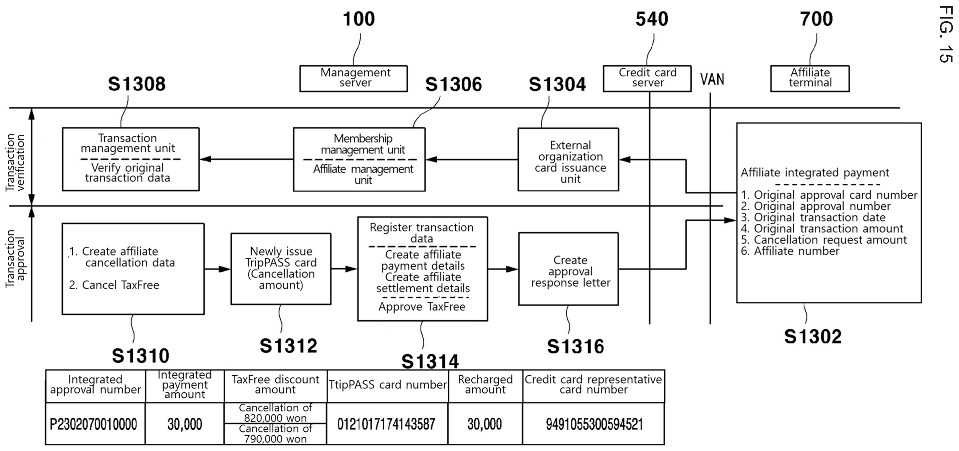

FIG. 15 is a view showing a partial cancellation process of the TripPASS prepaid card shown in FIG. 11.

When a partial cancellation is requested at the affiliate terminal 700 for some reason after completing the integrated payment through the steps as in FIG. 13, the partial cancellation is requested by transmitting information such as original approval card number, original approval number, original transaction date, original transaction amount, cancellation request amount, and affiliate number to the management server 100 through the credit card server 540 as shown in FIG. 15 (S1302).

The management server 100 goes through the internal external organization card issuance unit (S1304), the member management unit and the affiliate management unit (S1306), and the transaction management unit, thereby verifying the original transaction data (S1308).

Next, the management server 100 generates affiliate cancellation data, cancels the tax refund (S1310), and newly issues a TripPASS prepaid card recharged up to the canceled amount (S1312).

In addition, affiliate cancellation details and settlement details are generated and tax refunds are newly approved, so that transaction data is registered (S1314), and a corresponding approval response letter is generated (S1316) and notified to the affiliated terminal 700.

Accordingly, the affiliate terminal 700 performs a partial cancellation for a specific TripPASS prepaid card.

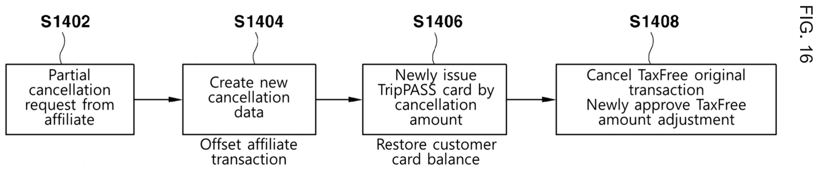

FIG. 16 is a view showing a partial cancellation configuration of the TripPASS prepaid card shown in FIG. 11.

When a partial cancellation is requested at the affiliate terminal 700 for some reason after completing the integrated payment through the steps as in FIG. 13 (S1402), the management server 100 generates new minimum data to offset the affiliate transaction (S1404), newly issues a TripPASS prepaid card recharged up to the canceled amount to restore the card balance (S1406), and cancels the tax-refunded original transaction to approve a new tax refund amount (S1408).

## Claims

1. A system for managing cash value-evaluated cryptocurrencies, the system comprising:
a company server for issuing a card or cryptocurrencies including cryptocurrency, gift certificate discount coupon, or operating an online/offline shopping mall allowing payment using the cryptocurrencies;
a management server including a recognition unit that recognizes the cryptocurrencies as goods to determine the recognized cryptocurrencies as cash value based on a business agreement with the company server, and concludes a contract with the company server to allow payment using cryptocurrencies issued by another company server at the online/offline shopping mall of the company server; and
a user terminal for generating an electronic wallet to store the cryptocurrencies and performing payment for a commodity purchased from the online/offline shopping mall by using the cryptocurrencies or a card stored in the electronic wallet.

2. The system of claim 1, further comprising:
a blockchain that serves as a blockchain-based platform constituting one or more cryptocurrencies handled by the management server and linked with the electronic wallet to process transactions related to payments for corresponding cryptocurrencies and to store processing details thereof across a plurality of blocks in a distributed manner.

3. The system of claim 1, wherein the cryptocurrencies are registered and managed through barcode or QR code having a unique identification number.

4. The system of claim 1, wherein the cryptocurrencies have a set expiration date, and upcoming expired cryptocurrencies are announced together with expiration dates and cash value on a sub-webpage operated by the management server.

5. The system of claim 4, wherein the management server reduces the cash value of the cryptocurrencies gradually when the expiration date approaches.

6. The system of claim 1, wherein the user terminals trade or exchange cryptocurrencies stored in electronic wallets with each other.

7. The system of claim 1, wherein the management server uses member information registered on a card corresponding to a representative card number among cards issued by a credit card server among the company servers to issue multiple TripPASS prepaid cards set in a recharging limit and stores the issued TripPASS prepaid cards in an electronic wallet, and
the TripPASS prepaid card serves as a prepaid card for foreigners traveling in Korea to allow simple payment by simply recharging and immediate payment at a duty-free price during shopping.

8. The system of claim 7, wherein the management server, when performing payment using the TripPASS prepaid cards, approves integrated payment using the representative card number, or approves integrated cancellation or partial cancellation of the approved integrated payment using the representative card number.

9. The system of claim 1, further comprising:
a buffer server configured to, when a discrepancy occurs between a cash-equivalent value determined for the cryptocurrencies and a payment amount, treat a discrepancy amount as having been paid or reconcile the discrepancy amount, thereby mediating an imbalance.

10. The system of claim 1, wherein the user terminal includes:
a seller terminal that has an electronic wallet for storing cryptocurrencies and registers, on the management server, selling conditions including types of cryptocurrencies to be sold, selling price and expiration date among the cryptocurrencies stored in the electronic wallet of the seller terminal; and
a buyer terminal that has an electronic wallet for storing the cryptocurrencies, checks the selling conditions of the cryptocurrencies uploaded on a trading website, and pays the selling price to a seller, thereby purchasing the cryptocurrencies, and wherein
the management server includes a trading unit configured to operate a website for trading the cryptocurrencies, upload selling conditions of the cryptocurrencies registered by the seller terminal, and allow the buyer terminal to check the uploaded selling conditions, so that a trading is concluded.

11. The system of claim 10, wherein the trading unit of the management server separately operates a sub-webpage to upload selling conditions modified from the seller terminal for cryptocurrencies having upcoming (approaching) expiration date among the registered cryptocurrencies, or upload, to the sub-webpage, modified selling conditions having a selling price reduced as the expiration date approaches based on an agreement with the seller terminal.

12. The system of claim 1, wherein the user terminal includes:
a buyer terminal that has an electronic wallet for storing cryptocurrencies and is configured to input and register, on the management server, types of cryptocurrencies to be purchased by the buyer terminal, a buying price, an expiration date, and a discount rate, and to pay a selling price of the cryptocurrency to a seller when a trading is concluded; and
a seller terminal that has an electronic wallet for storing cryptocurrencies and is configured to input and register, on the management server, types of cryptocurrencies to be sold, a selling price, an expiration date, and a discount rate, from among the cryptocurrencies stored in the electronic wallet of the seller terminal, and wherein
the management server includes a brokerage unit for matching buying conditions of cryptocurrencies input from the buyer terminal with buying conditions of cryptocurrencies input from the seller terminal to connect the buyer terminal and the seller terminal to each other, so as to conclude a trading of the cryptocurrencies.

13. The system of claim 12, wherein the brokerage unit vectorizes the buying conditions or the selling conditions into three dimensions having an x-axis (buying price or selling price), a z-axis (expiration date), and a y-axis (discount rate) as three axes, and matches the buying conditions with the selling conditions based on the three-dimensional vectors.

14. The system of claim 1, wherein the brokerage unit, when matching the three-dimensional vector of the buying conditions and the three-dimensional vector of the selling conditions, and failing to match, checks at least one three-dimensional vector of a similar counterparty (a seller for a buyer, or a buyer for a seller) and notifies the buyer terminal or the seller terminal of selling conditions or buying conditions corresponding to the at least one three-dimensional vector of the counterparty.

15. A method for managing cash value-evaluated cryptocurrencies, the method comprising:
(A) issuing, by a company server, cards or cryptocurrencies including cryptocurrency, gift certificate and discount coupon;
(B) performing a business agreement regarding recognition and operation as goods for the cryptocurrencies between the company server and a management server;
(C) acknowledging, by the management server, the cryptocurrencies as goods, determining cash value on the goods, and concluding a contract with the company server to allow payment of the cryptocurrencies in an online/offline shopping mall operated by another company server;
(D) generating an electronic wallet on a user terminal to store the cryptocurrencies;
(E) purchasing, by the user terminal, a commodity through the online/offline shopping mall and then performing payment by using the cryptocurrencies stored in the electronic wallet;
(F) processing, by a blockchain, a transaction subject to the payment of the cryptocurrencies in connection with the electronic wallet, storing processing details in distributed blocks, and storing movements of the cryptocurrencies on the management server; and
(G) depositing, by the company server, a commission for the payment of the cryptocurrencies into an account of the management server.

16. The method of claim 15, wherein the user terminal checks whether cryptocurrencies having upcoming expiration date are present among the cryptocurrencies stored in the electronic wallet of the user terminal, and notifies of the upcoming expiration date when the cryptocurrencies having the upcoming expiration date are present.

17. The method of claim 16, wherein the management server operates a sub-webpage for cryptocurrencies having an upcoming expiration date among the cryptocurrencies registered and managed by the management server, to notify corresponding cryptocurrencies, expiration dates, and cash values, and wherein the cash values are decreased as the expiration dates approach.

18. The method of claim 16, further comprising:
(H) using, by the management server, member information registered on a card corresponding to a representative card number among cards issued by a credit card server among company servers to issue multiple TripPASS prepaid cards set in a recharging limit.

19. The method of claim 18, further comprising:
(I) approving, by the management server, integrated payment using the representative card number, or approving integrated cancellation or partial cancellation for the approved integrated payment using the representative card number, when performing payment using the TripPASS prepaid cards.

20. The method of claim 16, further comprising:
(J) registering, in the management server, selling conditions including types of cryptocurrencies among the cryptocurrencies stored in the seller terminal of the user terminal, selling price, and expiration date, wherein the management server includes a trading unit uploading the registered selling conditions to a trading website operated by the trading unit;
(K) accessing, by the buyer terminal of the user terminal, the sales website to check and select the selling conditions, and paying selling price corresponding to the selected selling conditions to the seller; and
(L) paying, by at least one of the seller terminal and the buyer terminal, commission for trading cryptocurrencies to the management server.

21. The method of claim 20, further comprising:
(M) processing, by the blockchain, a transaction subject to trading of the cryptocurrencies in connection with the electronic wallets of the buyer terminal and the seller terminal, and storing processing details in distributed blocks.

22. The method of claim 16, further comprising:
(N) inputting, by the seller terminal of the user terminal, selling conditions including types of cryptocurrencies to be sold (cryptocurrency, gift certificate and discount coupon), selling price, expiration date, and discount rate, and inputting, by the buyer terminal of the user terminal, buying conditions including types of cryptocurrencies to be purchased (cryptocurrency, gift certificate, discount coupon), buying price, expiration date, and discount rate to register the buying conditions on the management server;
(O) matching, by a brokerage unit of the management server, the buying conditions and the selling conditions to connect the buyer terminal and the seller terminal to each other;
(P) agreeing, by the buyer terminal, to the selling conditions and paying a selling price for the agreed selling conditions to the seller;
(Q) processing, by the blockchain, a transaction subject to trading of the cryptocurrencies in connection with the electronic wallets of the buyer terminal and the seller terminal, and storing processing details in distributed blocks; and
(R) paying, by at least one of the seller terminal and the buyer terminal, brokerage commission for trading cryptocurrencies to the management server.

23. The method of claim 22, wherein the brokerage unit of the management server in step (O) vectorizes the buying conditions or the selling conditions into three dimensions having an x-axis (buying price or selling price), a z-axis (expiration date), and a y-axis (discount rate) as three axes, and matches the buying conditions with the selling conditions based on the three-dimensional vectors.

24. The method of claim 23, wherein the brokerage unit of the operation system, when matching the three-dimensional vector of the buying conditions and the three-dimensional vector of the selling conditions, and failing to match,
checks at least one three-dimensional vector of a similar counterparty (a seller for a buyer, or a buyer for a seller) and notifies the buyer terminal or the seller terminal of selling conditions or buying conditions corresponding to the at least one three-dimensional vector of the counterparty.

25. The method of claim 24, wherein when the buyer terminal or the seller terminal disagree to the selling conditions or the buying conditions of the counterparty,
the buying conditions or the selling conditions are modified and registered on the management server.
